# EUROPEAN PATENT APPLICATION

(11) **EP 4 351 243 A1**
(43) Date of publication of application: **10.04.2024**
(21) Application number: 22810914.6
(22) Date of filing: 08.03.2022
(51) Int. Cl.: H04W 72/04, H04L 27/26, H04W 28/06, H04W 84/12

(54) **TERMINAL, BASE STATION, AND COMMUNICATION METHOD**

(30) Priority: 28.05.2021 JP 2021090370
(71) Applicant: Panasonic Intellectual Property Corporation of America, Torrance, CA 90504 (US)
(72) Inventor: MINOTANI, Jun, Kadoma-shi, Osaka 571-0057 (JP); IWAI, Takashi, Kadoma-shi, Osaka 571-0057 (JP); TAKATA, Tomofumi, Kadoma-shi, Osaka 571-0057 (JP); URABE, Yoshio, Kadoma-shi, Osaka 571-0057 (JP)
(74) Representative: Grünecker Patent- und Rechtsanwälte PartG mbB
(86) International application number: PCT/JP2022/009965
(87) International publication number: WO 2022/249633

(57) **Abstract**

This terminal comprises: a receiving circuit which receives control information including information regarding a timing of a frequency resource for performing reception processing, among a plurality of frequency resources used for the frequency-multiplexed transmission of a plurality of downlink signals; and a control circuit which controls the reception processing on the basis of the control information.

## Description

### Technical Field

The present disclosure relates to a terminal, a base station, and a communication method.

### Background Art

As a successor standard of 802.11ax (hereinafter also referred to as "11ax"), which is a standard of The Institute of Electrical and Electronics Engineers (IEEE) 802.11, technical specifications of 802.1The (hereinafter also referred to as "11be") are being developed by Task Group (TG). For example, 802.11ax is also called High Efficiency (HE), and 802.11be is also called Extreme High Throughput (EHT).

### Citation List

### Non-Patent Literature

NPL 1
   IEEE 802.11-20/674r3, "Forward Compatible OFDMA"
NPL 2
   IEEE 802.11-20/693r1, "Aggregated PPDU for Large BW"
NPL 3
   IEEE 802.11 P802.11ax/D8.0, October 2020

### Summary of Invention

However, a method in which a terminal appropriately receives a plurality of frequency-multiplexed data signals in wireless communication such as a wireless local area network (LAN) has not been sufficiently studied.

A non-limiting embodiment of the present disclosure facilitates providing a terminal, a base station, and a communication method each allowing the terminal to appropriately receive a plurality of frequency-multiplexed data signals.

A terminal according to an embodiment of the present disclosure includes: reception circuitry, which, in operation, receives control information including information regarding a timing of a frequency resource for performing a reception process among a plurality of frequency resources used for transmission of a plurality of frequency-multiplexed downlink signals; and control circuitry, which, in operation, controls the reception process, based on the control information.

Note that these generic or specific aspects may be achieved by a system, an apparatus, a method, an integrated circuit, a computer program, or a recoding medium, and also by any combination of the system, the apparatus, the method, the integrated circuit, the computer program, and the recoding medium.

According to an embodiment of the present disclosure, for example, the terminal can appropriately receive a plurality of frequency-multiplexed data signals.

Additional benefits and advantages of the disclosed exemplary embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a diagram illustrating an example of an Aggregated-Physical Layer Convergence Procedure Protocol Data Unit (A-PPDU);
FIG. 2 is a block diagram illustrating a configuration example of a part of an access point (AP: Access Point);
FIG. 3 is a block diagram illustrating a configuration example of a part of a Station (STA);
FIG. 4 is a sequence diagram illustrating an operation example of the AP and the STA;
FIG. 5 is a block diagram illustrating a configuration example of the AP;
FIG. 6 is a block diagram illustrating a configuration example of the STA;
FIG. 7 is a diagram illustrating a transmission example of the A-PPDU;
FIG. 8 is a diagram illustrating a transmission example of the A-PPDU;
FIG. 9 is a diagram illustrating a transmission example of the A-PPDU;
FIGS. 10A and 10B are diagrams illustrating an example of a Common Info field of a Multi-User Request-To-Send (MU-RTS);
FIGS. 11A and 11B are diagrams illustrating an example of a notification method of a frequency resource;
FIG. 12 is a diagram illustrating an example of a Special User Info field;
FIG. 13 is a diagram illustrating an example of a notification method of a bandwidth of a DL A-PPDU;
FIG. 14 is a diagram illustrating an example of notifying control information of the DL A-PPDU by the MU-RTS;
FIG. 15 is a diagram illustrating an example of a Trigger type subfield;
FIG. 16 is a diagram illustrating an example of notifying the control information of the DL A-PPDU by a Parking channel notification;
FIGS. 17A and 17B are diagrams illustrating examples of a Parking channel notification frame;
FIG. 18 is a diagram illustrating an example of a Control frame type;
FIG. 19 is a diagram illustrating an example of an EHT RTS frame;
FIG. 20 is a diagram illustrating an example of notifying the control information of the DL A-PPDU by an EHT RTS;
FIG. 21 is a diagram illustrating an example of a User Info field of the MU-RTS;
FIG. 22 illustrates an example of the A-PPDU;
FIG. 23 illustrates an example of the A-PPDU;
FIG. 24 illustrates a transmission example of the A-PPDU;
FIG. 25 illustrates an example of a Target Wake Time (TWT) element;
FIG. 26 is a diagram illustrating an example of a Control field; and
FIG. 27 is a diagram illustrating an example of an Individual TWT Parameter Set field.

### Description of Embodiments

Hereinafter, each of the embodiments of the present disclosure will be described in detail with reference to the drawings.

In 11be, an Aggregated-Physical Layer Convergence Procedure Protocol Data Unit (hereinafter referred to as "A-PPDU") in a frequency domain for concurrently transmitting signals of a plurality of IEEE wireless standards (for example, also referred to as versions) by orthogonal frequency division multiple access (for example, OFDMA: Orthogonal Frequency Division Multiple Access) has been discussed (for example, see Non-Patent Document 1 or 2).

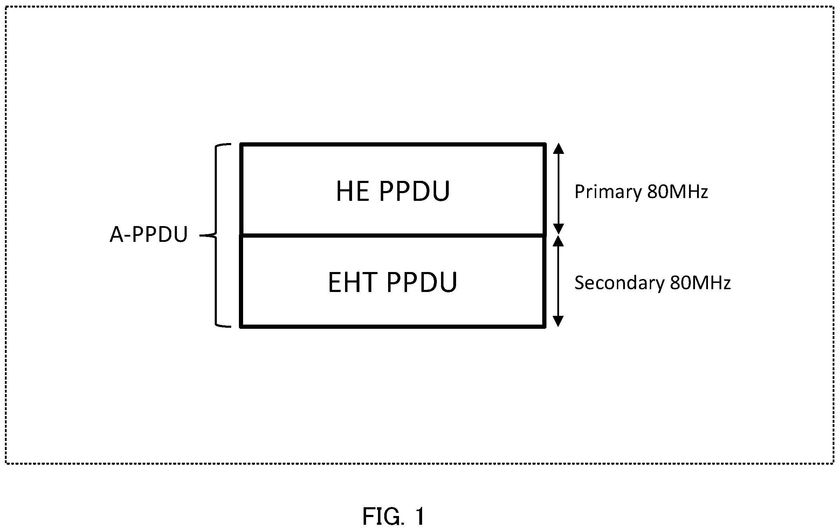

FIG. 1 is a diagram illustrating an example of the A-PPDU.

The A-PPDU is, for example, a signal including two or more PPDUs of a wireless standard after 11ax. For example, in the example illustrated in FIG. 1, the A-PPDU is a signal including a PPDU corresponding to 11ax (for example, referred to as an HE PPDU) and a PPDU corresponding to 11be (for example, referred to as an EHT PPDU). The PPDUs included in the A-PPDU are, for example, allocated to different frequency resources (for example, also referred to as Resource Units (RUs) or channels), and are orthogonalized and transmitted in the frequency domain. The A-PPDU may use any communication method of, for example, Downlink (DL) and Uplink (UL). For example, the A-PPDU in the DL may be referred to as a "DL A-PPDU", and the A-PPDU in the UL may be referred to as a "UL A-PPDU".

When the A-PPDU is not applied, for example, a method in which a PPDU corresponding to each wireless standard is individually scheduled and transmitted, or a method in which a PPDU corresponding to a wireless standard (for example, an old wireless standard) supported by each of a plurality of terminals (for example, referred to as Stations (STAs) or non-Access Point (AP) STAs) can be given. In contrast, by applying the A-PPDU, for example, even if the wireless standards supported by the plurality of STAs are different from each other, the most recent PPDUs supported by the respective STAs can be concurrently transmitted by the OFDMA, so that the overhead can be reduced and the system throughput can be improved.

In 11ax, for example, a channel common to all STAs belonging to a network (referred to as a Basic Service Set (BSS)) including one access point (also referred to as an Access Point (AP) or a "base station") and a plurality of STAs is referred to as a "primary channel". The primary channel may be, for example, a 20 MHz channel. For example, the AP of each BSS may individually decide the primary channel in a frequency band to be used (for example, a 2.4 GHz band, a 5 GHz band, or a 6 GHz band) and notify the STA of the information regarding the primary channel by a signal such as a beacon.

In addition, for example, in a case where a signal is transmitted using a bandwidth of 40 MHz or more, a channel that does not include the primary channel is referred to as a "non-primary channel".

The AP and the STA, for example, perform communication by preferentially using the primary channel. For example, a transmitter (for example, one of the AP and the STA) performs carrier sensing in the primary channel, and does not perform transmission in a case where the primary channel is busy. For example, in a case where the primary channel is clear, the transmitter may decide the bandwidth of the transmission signal including only the clear channel in consideration of carrier sensing of a channel (for example, also referred to as a secondary channel) other than the primary channel. In addition, for example, a receiver may perform a reception process, based on control information included in a preamble of a signal received in the primary channel. For example, in the example of the A-PPDU illustrated in FIG. 1, the HE PPDU is allocated to 80 MHz including the primary channel (also referred to as a primary 80 MHz channel), and the EHT PPDU is allocated to 80 MHz not including the primary channel (also referred to as a secondary 80 MHz channel).

Here, a method in which each STA receives the DL A-PPDU has not been sufficiently studied. For example, there is room for study on a method in which each STA specifies a frequency resource (for example, an RU or a channel) to which the PPDU addressed to the STA is allocated in the DL A-PPDU. For example, in a case where a data signal (for example, user information) addressed to the STA is not included in the PPDU subjected to the reception process in the primary channel, the STA may stop the reception process even when the data signal addressed to the STA is included in the non-primary channel. Therefore, for example, it is expected that the STA appropriately decides the timing of receiving a DL signal included in the DL A-PPDU in the non-primary channel, for example. Note that the term "specify" may be replaced with terms such as "decide", "check, "determine", and "identify".

In a non-limiting embodiment of the present disclosure, a method in which the STA appropriately receives the A-PPDU signal will be described.

For example, the AP may notify the STA of control information regarding the transmission of the DL signal (for example, the A-PPDU). For example, the control information regarding the transmission of the DL signal notifies information regarding a channel in which the STA receives the DL signal or information regarding a timing at which the STA performs reception in a specific channel (for example, the non-primary channel), and thus, the STA can perform the reception process of the DL signal in an appropriate channel. Note that the term "notify" may be replaced with, for example, "indicate" or "designate".

### [Configuration of Radio Communication System]

A radio communication system according to the present embodiment may include, for example, at least one AP 100 and plural STAs 200. Note that AP 100 may be referred to as a "downlink radio transmission apparatus" in DL communication, and STA 200 may be referred to as a "downlink radio reception apparatus" in DL communication.

Hereinafter, as an example, a method in which AP 100 transmits the DL A-PPDU to STA 200 in 11be will be described. AP 100 is, for example, an AP that supports 11be (or EHT), and may be an AP that has backward compatibility with HE (for example, an AP that also supports HE). In addition, STA200 may be, for example, any of an STA corresponding to 1 1ax (for example, an HE terminal or an HE STA) and an STA corresponding to 1 1be (for example, an EHT terminal or an EHT STA).

For example, AP 100 may transmit the DL A-PPDU to STA 200. In addition, for example, AP 100 may transmit the control information regarding the transmission of the DL A-PPDU (for example, referred to as A-PPDU control information or DL A-PPDU control information) to STA 200. For example, STA 200 may receive the DL A-PPDU, based on the A-PPDU control information.

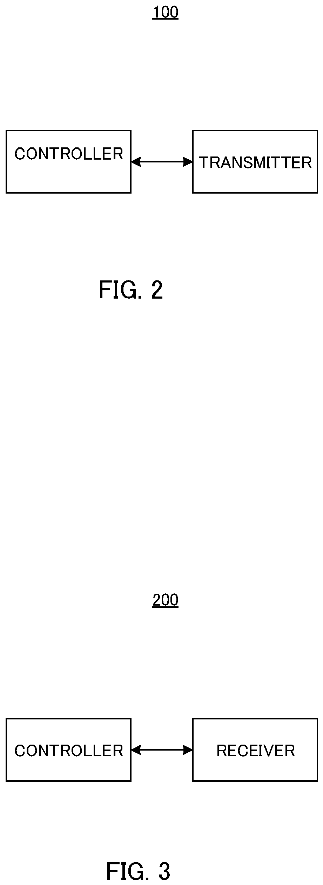

FIG. 2 is a block diagram illustrating a configuration example of a part of AP 100 according to an embodiment of the present disclosure. In AP 100 illustrated in FIG. 2, a transmitter (for example, corresponding to a transmission circuit) transmits control information (for example, the A-PPDU control information) including information regarding a timing of a frequency resource for performing the reception process among a plurality of frequency resources used for the transmission of a plurality of frequency-multiplexed downlink signals (for example, the transmission of the A-PPDU). Based on the control information, a controller (for example, corresponding to a control circuit) controls a transmission process of the plurality of downlink signals.

FIG. 3 is a block diagram illustrating a configuration example of a part of STA200 according to an embodiment of the present disclosure. In STA 200 illustrated in FIG. 3, a receiver (for example, corresponding to a reception circuit) receives the control information (for example, the A-PPDU control information) including the information regarding the timing of the frequency resource for performing the reception process among the plurality of frequency resources used for the transmission of the plurality of frequency-multiplexed downlink signals (for example, the transmission of the A-PPDU). Based on the control information, a controller (for example, corresponding to a control circuit) controls the reception process of the downlink signals.

An operation example of AP 100 and STA 200 of the present embodiment will be described.

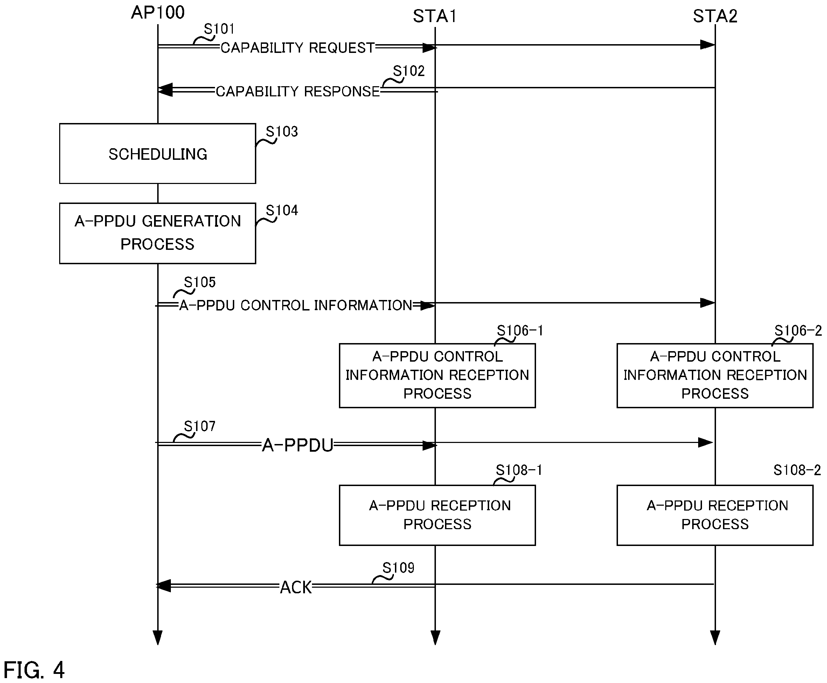

FIG. 4 is a sequence diagram illustrating, as an example, an operation example in which AP 100 transmits the A-PPDU to two STAs 200 (for example, STA1 and STA2) in 11be.

For example, AP 100 transmits a signal (for example, a Capability request signal) for requesting the transmission of capability information (for example, referred to as Capability) regarding the A-PPDU of STA200 to STA1 and STA2 (S101). STA1 and STA2 transmit the Capability information (for example, a Capability response signal) regarding the A-PPDU of each STA in response to the Capability request signal (S 102).

The Capability information regarding the A-PPDU may include, for example, information regarding a PPDU of a wireless standard supported by STA 200, information regarding whether to support the A-PPDU, information regarding whether to support Selective Subchannel Transmission (SST), or information regarding a bandwidth supported by STA200.

For example, AP 100 may schedule the transmission of the A-PPDU (S103). For example, AP 100 may select STA200 to which the A-PPDU can be transmitted, based on the capability information acquired from each STA 200, and may perform scheduling, for example, allocate the RU, decide a spatial multiplexing method, or decide a modulation method. For example, in the scheduling, when the A-PPDU includes the PPDU for the HE STA, AP 100 may allocate the PPDU for the HE STA to the frequency resource including the primary channel.

For example, based on the scheduling result, AP 100 may generate the A-PPDU (S104). In addition, for example, AP 100 may generate the control information regarding the A-PPDU (the A-PPDU control information).

For example, AP 100 may transmit the A-PPDU control information to STA 200 (S105). For example, AP 100 may transmit the A-PPDU control information prior to the transmission of the A-PPDU. In addition, for example, AP 100 may transmit the A-PPDU control information to all STAs 200, or may transmit the A-PPDU control information to some STAs 200.

For example, when the A-PPDU control information is transmitted, STA1 and STA2 perform the reception process of the A-PPDU control information and store the A-PPDU control information in a buffer (S106-1 and S106-2).

For example, after transmitting the A-PPDU control information, AP 100 transmits the A-PPDU to STA1 and STA2 (S107).

STA1 and STA2 perform the reception process of the A-PPDU transmitted from AP 100 (S108-1 and S108-2). For example, in a case where the A-PPDU control information is stored in the buffer, based on the A-PPDU control information, STA1 and STA2 may determine the frequency resource (for example, the RU) of the A-PPDU to which the PPDU of each STA is to be allocated. On the other hand, for example, in a case where the A-PPDU control information is not stored in the buffer, STA1 and STA2 each perform the reception process of a preamble part of each PPDU included in the A-PPDU with reference to a plurality of (for example, all) RUs in which the A-PPDU is transmitted, and may determine the RU to which the PPDU addressed to each STA is to be allocated. Upon determining the RU to be allocated, STA1 and STA2 perform an equalization process of a data part, demodulation, and decoding, based on a channel estimation value acquired using a reference signal (for example, Long Training Field (LTF)) included in the preamble part of the PPDU addressed to the STA.

For example, STA1 and the STA2 transmit a response signal with respect to the A-PPDU (for example, Acknowledge (ACK)) to AP 100, based on an error check result of the decoded data signal (S109).

### [Configuration Example of AP 100]

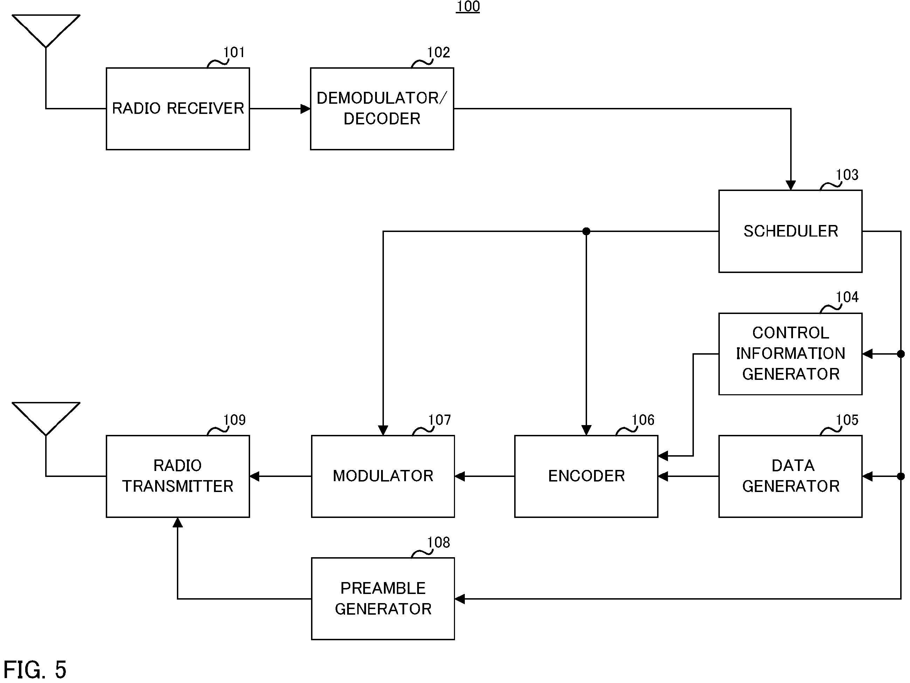

FIG. 5 is a block diagram illustrating a configuration example of AP 100 (for example, a downlink radio transmission apparatus of DL communication). AP 100 illustrated in FIG. 5 may include, for example, radio receiver 101, demodulator/decoder 102, scheduler 103, control information generator 104, data generator 105, encoder 106, modulator 107, preamble generator 108, and radio transmitter 109.

At least one of demodulator/decoder 102, scheduler 103, control information generator 104, data generator 105, encoder 106, modulator 107, and preamble generator 108 illustrated in FIG. 5 may be included in the controller illustrated in FIG. 3, for example. In addition, radio transmitter 109 illustrated in FIG. 5 may be included in the transmitter illustrated in FIG. 3, for example.

For example, radio receiver 101 receives a signal transmitted from STA 200 (for example, the downlink radio reception apparatus) via an antenna, and performs a radio reception process such as down-conversion and Analog-to-Digital (A/D) conversion. For example, radio receiver 101 divides the signal after the radio reception process into the preamble part (also referred to as a preamble signal) and a data part (also referred to as a data signal), and outputs the divided signal to demodulator/decoder 102.

For example, demodulator/decoder 102 performs a demodulation process such as Fourier transform (for example, Fast Fourier Transform (FFT)) on each of the preamble signal and the data signal output from radio receiver 101, and extracts the control information included in the preamble signal. The control information included in the preamble signal may include, for example, information such as a frequency bandwidth (Bandwidth (BW)), a Modulation and Coding Scheme (MCS), or an encoding method.

In addition, for example, demodulator/decoder 102 acquires the channel estimation value, based on the reference signal included in the preamble signal, and performs channel equalization of the data signal after FFT by using the channel estimation value, to decode the data signal by using the control information acquired from the preamble signal. For example, demodulator/decoder 102 performs an error check such as a Cyclic Redundancy Check (CRC) on the decoded data signal, and, when there is no signal error, outputs the decoded data signal to scheduler 103.

For example, scheduler 103 performs a scheduling process regarding the A-PPDU. For example, scheduler 103 decides scheduling information of the A-PPDU to be transmitted to STA 200, based on the capability of STA 200 included in the data signal output from demodulator/decoder 102, and outputs the decided scheduling information to data generator 105, encoder 106, modulator 107, and preamble generator 108. The scheduling information may include, for example, information regarding whether or not the A-PPDU is applied, the type of the PPDU (for example, the HE PPDU or the EHT PPDU) included in the A-PPDU, the RU allocation, the MCS, or an error correction method.

In addition, for example, scheduler 103 may decide whether or not to transmit the A-PPDU control information to STA 200. For example, in a case where the A-PPDU control information is to be transmitted, scheduler 103 may output the scheduling information (for example, RU allocation information) for the A-PPDU and information regarding a signal format for transmitting the A-PPDU control information to control information generator 104. In addition, for example, scheduler 103 decides the scheduling information (for example, including the MCS or the error correction method) for the A-PPDU control information to be transmitted to STA 200, and outputs the decided scheduling information to encoder 106, modulator 107, and preamble generator 108.

In addition, for example, in a case where the A-PPDU control information is not to be transmitted, scheduler 103 may refrain from performing the output to control information generator 104.

For example, based on the scheduling information of the A-PPDU and the signal format information, which is output from scheduler 103, control information generator 104 generates the control information (for example, the A-PPDU control information) for STA 200 to receive the A-PPDU, and outputs the generated A-PPDU control information to encoder 106.

For example, based on the scheduling information of the A-PPDU output from scheduler 103, data generator 105 generates a data sequence to be included in the A-PPDU to be transmitted to STA 200, and outputs the data sequence to encoder 106.

For example, based on the scheduling information (for example, the error correction method and the MCS) for the A-PPDU control information, which is output from scheduler 103, encoder 106 encodes the control information output from control information generator 104, and outputs the encoded data of the A-PPDU control information to modulator 107. In addition, for example, based on the scheduling information (for example, the error correction method and the MCS) for the A-PPDU, which is output from scheduler 103, encoder 106 encodes the data sequence output from data generator 105, and outputs the encoded data of the A-PPDU to modulator 107.

For example, based on the scheduling information (for example, the modulation method) output from scheduler 103, modulator 107 performs modulation and inverse Fourier transform (IFFT) on the encoded data output from encoder 106. For example, modulator 107 may perform a modulation process on the encoded data of the A-PPDU with reference to the scheduling information of the A-PPDU, and perform a modulation process on the encoded data of the A-PPDU control information with reference to the scheduling information of the A-PPDU control information. Modulator 107 outputs the modulated data to radio transmitter 109.

Based on the scheduling information of the A-PPDU (for example, the type of the PPDU included in the A-PPDU), or the scheduling information of the A-PPDU control information (for example, the signal format information), which is output from scheduler 103, preamble generator 108 generates the preamble signal, and outputs the preamble signal subjected to the modulation and IFFT process to radio transmitter 109.

For example, radio transmitter 109 adds the preamble signal output from preamble generator 108 to the modulated data output from modulator 107 to generate a radio frame (also referred to as a packet signal). Radio transmitter 109 performs a radio transmission process such as Digital-to-Analog (D/A) conversion on the radio frame and up-conversion on a carrier frequency, and transmits the signal after the radio transmission process to STA 200 via an antenna.

### [Configuration Example of STA 200]

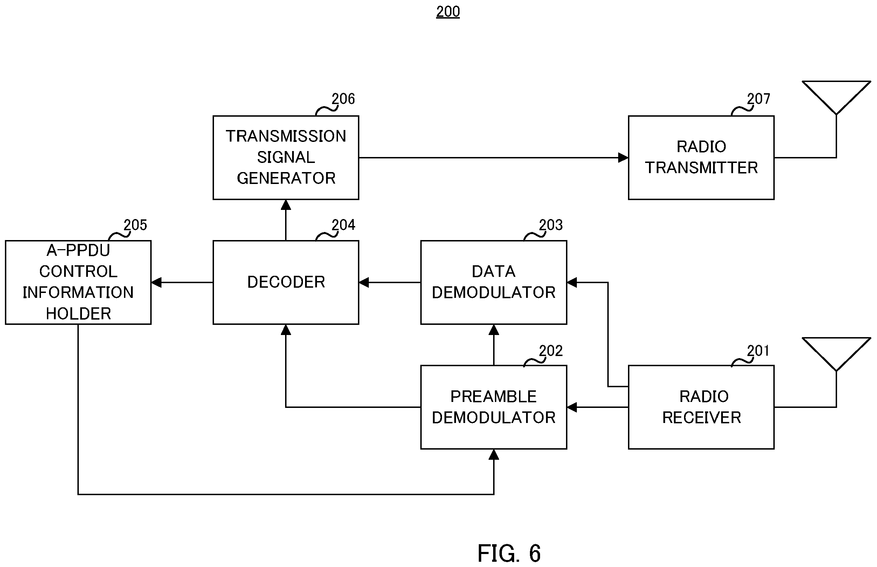

FIG. 6 is a block diagram illustrating a configuration example of STA200. STA200 illustrated in FIG. 6 may include, for example, radio receiver 201, preamble demodulator 202, data demodulator 203, decoder 204, A-PPDU control information holder 205, transmission signal generator 206, and radio transmitter 207.

At least one of preamble demodulator 202, data demodulator 203, decoder 204, A-PPDU control information holder 205, and transmission signal generator 206 illustrated in FIG. 6 may be included in the controller illustrated in FIG. 4, for example. In addition, radio receiver 201 illustrated in FIG. 6 may be included in the receiver illustrated in FIG. 4, for example.

For example, radio receiver 201 receives a signal transmitted from AP 100 (for example, the downlink radio transmission apparatus) via an antenna, and performs a radio reception process such as down-conversion and A/D conversion. Radio receiver 201 outputs a data signal extracted from the received signal after the radio reception process to data demodulator 203, and outputs the preamble signal to preamble demodulator 202.

For example, preamble demodulator 202 may perform a demodulation process on the preamble signal received in the frequency resource (for example, the RU) indicated by the A-PPDU control information output from A-PPDU control information holder 205, among preamble signals output from radio receiver 201. For example, preamble demodulator 202 performs the demodulation process such as FFT on the preamble signal, and extracts the received control information (for example, including the bandwidth, the MCS, or the error correction method) to be used for demodulation and decoding of the data part. In addition, for example, preamble demodulator 202 performs channel estimation by using a reference signal included in the preamble signal, and derives the channel estimation value. For example, preamble demodulator 202 outputs the received control information to data demodulator 203 and decoder 204, and outputs the channel estimation value to data demodulator 203.

For example, data demodulator 203 performs a process such as FFT on the data signal output from radio receiver 201, demodulates the data signal, based on the received control information and the channel estimation value output from preamble demodulator 202, and outputs the demodulated data to decoder 204.

Based on the received control information output from preamble demodulator 202, decoder 204 decodes the demodulated data output from data demodulator 203, and performs an error check such as a CRC. For example, decoder 204 outputs information regarding the error check result to transmission signal generator 206. In addition, for example, decoder 204 outputs the decoded data sequence to A-PPDU control information holder 205.

For example, in a case where the A-PPDU control information is included in the data sequence output from decoder 204, A-PPDU control information holder 205 stores the A-PPDU control information in the buffer. For example, in a case where radio receiver 201 receives a signal in a period (or at a timing) designated by the A-PPDU control information, A-PPDU control information holder 205 may output the A-PPDU control information held in the buffer to preamble demodulator 202.

For example, based on the information regarding the error check result output from decoder 204, transmission signal generator 206 generates a data sequence including a response signal (for example, referred to as ACK or Block ACK (BA)) or Clear to Send (CTS)). For example, transmission signal generator 206 performs a process such as encoding, allocation to a prescribed RU, modulation, or IFFT on the generated data sequence, and generates a data signal. For example, transmission signal generator 206 adds the preamble signal to the generated data signal to generate a radio frame (transmission signal), and outputs the radio frame to radio transmitter 207.

For example, radio transmitter 207 performs a radio transmission process such as D/A conversion and up-conversion to the carrier frequency on the radio frame output from transmission signal generator 206, and transmits the signal after the radio transmission process to AP 100 via an antenna.

### [Operation Example of AP 100 and STA 200]

Next, an operation example of AP 100 and STA 200 according to the present embodiment will be described.

For example, AP 100 transmits control information regarding the transmission of a DL signal to STA 200. As an example, the DL signal may be the DL A-PPDU, and the control information may be the A-PPDU control information. For example, the A-PPDU control information may include at least one of information regarding the presence or absence of the transmission of the DL signal and allocation information of the frequency resource (for example, the RU or the channel) of the DL signal. The A-PPDU control information may further include, for example, the information regarding the timing of the frequency resource (for example, the non-primary channel) in which STA 200 performs the reception process among the plurality of frequency resources (for example, RUs or channels) for the transmission of the plurality of frequency-multiplexed DL signals (for example, the transmission of the A-PPDU).

Hereinafter, examples (for example, Method 1 to Method 3) of a method regarding the transmission of the A-PPDU control information will be described.

### <Method 1>

In Method 1, for example, the A-PPDU control information may include information regarding the transmission timing of the DL A-PPDU (referred to as transmission timing information).

For example, the A-PPDU control information may be transmitted before the transmission of the DL A-PPDU.

In addition, the A-PPDU control information may include information regarding the reception of the DL A-PPDU in STA 200 (for example, information regarding a channel number or a frequency resource), in addition to the transmission timing information of the DL A-PPDU.

Example 1-1 and Example 1-2 of Method 1 will be described below.

### (Example 1-1)

In Example 1-1, the transmission timing information may indicate a timing at which AP 100 transmits the DL A-PPDU (for example, frequency-multiplexed signals) after transmitting the A-PPDU control information.

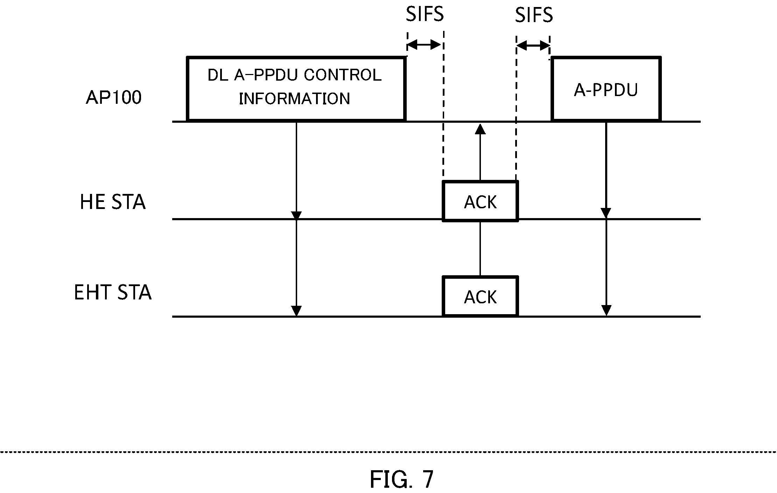

FIG. 7 is a diagram illustrating an operation example of the transmission of the A-PPDU according to Example 1-1 of Method 1.

For example, in a case of transmitting the DL A-PPDU, AP 100 may notify each STA 200 (for example, the HE STA and the EHT STA) of the A-PPDU control information including the channel information for each STA 200 to receive the A-PPDU.

In addition, as illustrated in FIG. 7, upon receiving the DL A-PPDU, the HE STA and the EHT STA transmit the response signal (for example, the ACK or the CTS) to AP 100. Each STA 200 may transmit the response signal, for example, after a Short Interframe Space (SIFS) from the reception of the A-PPDU control information.

In addition, as illustrated in FIG. 7, after receiving the response signals, AP 100 may transmit the DL A-PPDU. For example, AP 100 transmits the DL A-PPDU after the SIFS from the reception of the response signals, and, for example, each STA200 may receive the DL A-PPDU after the SIFS from the transmission of the response signal. For example, each STA 200 may perform the reception process of the A-PPDU, based on the channel information notified by the A-PPDU control information.

Note that the transmission timing of the A-PPDU is not limited to the timing after the transmission of the A-PPDU control information and the transmission of the response signals in response to the A-PPDU control information as illustrated in FIG. 7. In Example 1-1, for example, the transmission timing information may indicate a timing at which AP 100 transmits the DL A-PPDU subsequent to (for example, immediately after) the transmission of the A-PPDU control information.

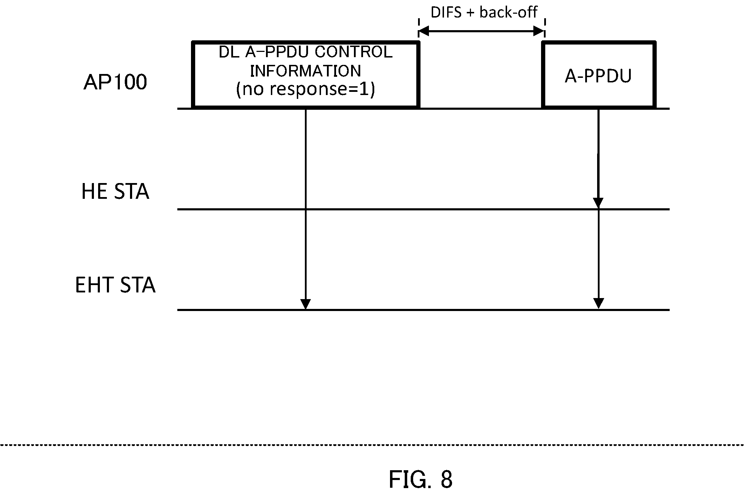

FIG. 8 is a diagram illustrating an operation example of the transmission of the A-PPDU according to Example 1-1 of Method 1.

As illustrated in FIG. 8, the A-PPDU control information may include, for example, a "no response subfield" notifying (or indicating) the transmission stop of the response signal with respect to the A-PPDU control information. For example, no response subfield = 1 may indicate the transmission stop of the response signal, and no response subfield = 0 may indicate the transmission of the response signal.

For example, in a case of transmitting the DL A-PPDU, AP 100 may notify the EHT STA of the A-PPDU control information including the channel information for receiving the EHT PPDU included in the A-PPDU. In addition, AP 100 may set no response subfield = 1 included in the A-PPDU control information to notify the EHT STA of the transmission stop of the response signal.

As illustrated in FIG. 8, AP 100 may transmit the DL A-PPDU after transmitting the A-PPDU control information. In other words, AP 100 does not necessarily receive the response signal with respect to the A-PPDU control information after transmitting the A-PPDU control information. For example, after transmitting the A-PPDU control information, AP 100 may newly perform carrier-sensing with respect to the HE STA and the EHT STA and then transmit the DL A-PPDU. As illustrated in FIG. 8, for example, AP 100 may transmit the DL A-PPDU after (Distributed Coordination Function Interframe Space (DIFS) + back-off) after transmitting the A-PPDU control information.

In addition, in FIG. 8, upon receiving the DL A-PPDU, for example, the HE STA may perform the reception process of the HE PPDU included in the DL A-PPDU in the primary channel.

In addition, in FIG. 8, upon receiving the DL A-PPDU, for example, the EHT STA may perform the reception process of the EHT PPDU included in the DL A-PPDU in the frequency resource (for example, the non-primary channel) based on the channel information notified by the A-PPDU control information.

Note that, in a case where no response subfield = 0 included in the A-PPDU control information is set, for example, as illustrated in FIG. 7, AP 100 may transmit the A-PPDU control information to the HE STA and the EHT STA, and transmit the DL A-PPDU after receiving the response signals (for example, the CTS).

According to the example illustrated in FIG. 8, since it is possible to transmit and receive the A-PPDU without transmitting and receiving the response signals, for example, it is possible to reduce signaling and a processing amount regarding the transmission of the response signals.

Thus, according to Example 1-1, for example, the EHT STA may decide, based on the A-PPDU control information, the reception process of a data signal (for example, the EHT PPDU) addressed to the EHT STA in a specific frequency resource (for example, the non-primary channel) for the A-PPDU at a timing after receiving the A-PPDU control information (for example, at a timing after transmitting the response signal or after receiving the A-PPDU control information). Accordingly, for example, the EHT STA can appropriately decide the timing of receiving the DL signal included in the DL A-PPDU in the non-primary channel, and can perform the reception process of the DL signal in an appropriate channel.

### (Example 1-2)

In Example 1-2, STA200 may be notified of a certain period in which the DLA-PPDU may be transmitted (or a period in which AP 100 can transmit the DL A-PPDU) by the transmission timing information.

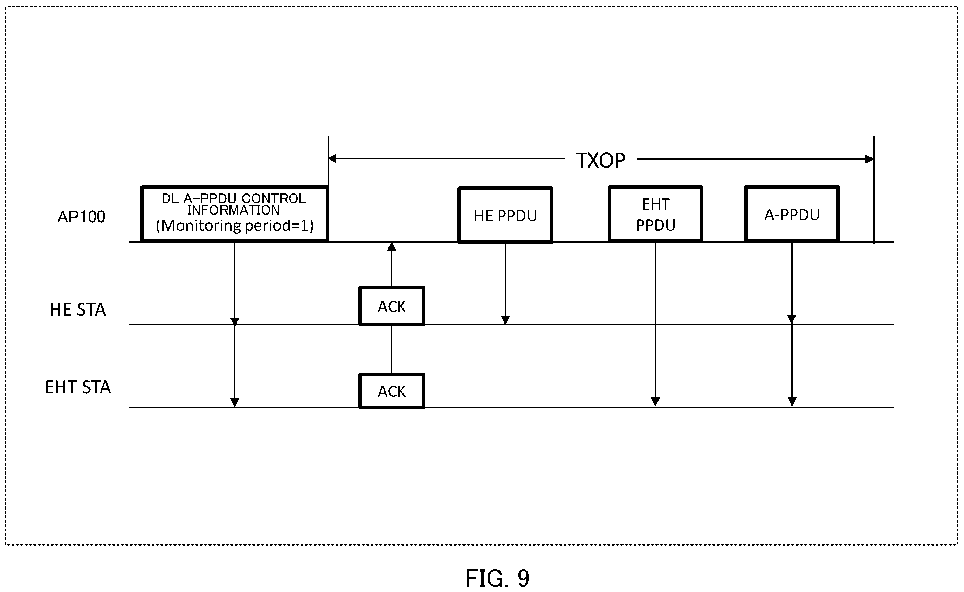

FIG. 9 is a diagram illustrating an operation example of the transmission of the A-PPDU according to Example 1-2 of Method 1.

As illustrated in FIG. 9, the A-PPDU control information may include, for example, a "monitoring period subfield" notifying that a signal is to be received for a certain period, based on the channel information notified to STA 200 by the A-PPDU control information.

The certain period may be, for example, a period based on a Transmission Opportunity (TXOP) notified by an RTS or MU-RTS (for example, see Non-Patent Document 3) or a Target Wake Time (TWT) notified by a beacon signal. Alternatively, for example, a period different from the period based on the TXOP and the TWT may be set as the certain period.

In FIG. 9, for example, in a case of transmitting the DL A-PPDU, AP 100 may notify the HE STA and the EHT STA of the A-PPDU control information and information regarding the certain period (for example, the TXOP). In addition, for example, by setting monitoring period subfield = 1 included in the A-PPDU control information, AP 100 may notify the EHT STA that the reception process is to be performed in the frequency resource based on the channel information included in the A-PPDU control information during the notified certain period (for example, the TXOP).

For example, AP 100 may transmit the A-PPDU to the HE STA and the EHT STA at a timing within the period corresponding to the TXOP. As illustrated in FIG. 9, for example, AP 100 may transmit, to the HE STA and the EHT STA, a signal different from the DL A-PPDU (for example, the HE PPDU or the EHT PPDU) within the period of the TXOP.

For example, in a case of receiving the A-PPDU control information including monitoring period subfield = 0, the HE STA and the EHT STA may perform the reception process in the primary channel. In addition, for example, in a case of receiving the A-PPDU control information including monitoring period subfield = 1, the EHT STA may perform the reception process in the frequency resource (for example, the non-primary channel) based on the channel information included in the A-PPDU control information.

As described above, according to Example 1-2, for example, the EHT STA may decide the timing (or the period) of performing the reception process of a data signal (for example, the EHT PPDU) addressed to the EHT STA in a specific frequency resource (for example, the non-primary channel) for the A-PPDU, based on the A-PPDU control information. Accordingly, for example, the EHT STA can appropriately decide the timing of receiving the DL signal included in the DL A-PPDU in the non-primary channel, and can perform the reception process of the DL signal in an appropriate channel.

In addition, according to Example 1-2, for example, since AP 100 can transmit the A-PPDU at a timing within the certain period, the flexibility of scheduling for the A-PPDU can be improved.

Example 1-1 and Example 1-2 of Method 1 have been described above.

According to Method 1, based on the A-PPDU control information, STA 200 can determine the channel for performing the reception process of the A-PPDU. Therefore, the channel to which the PPDU corresponding to STA 200 is allocated may be set as a target of the reception process, and it is not necessary to perform the reception process in all the channels in which the A-PPDU is transmitted. Therefore, for example, the load of the decoding process in STA 200 can be reduced. In addition, since STA 200 can determine, based on the A-PPDU control information, the timing of receiving the A-PPDU, the reception process of the DL signal can be performed in an appropriate channel (for example, the non-primary channel).

In addition, since AP 100 can designate the transmission timing of the DL A-PPDU to STA 200 by the A-PPDU control information, the degree of freedom (or flexibility) of scheduling for the A-PPDU can be improved.

### <Method 2>

In Method 2, the A-PPDU control information may be included in a Trigger frame.

Example 2-1 and Example 2-2 of Method 2 will be described below.

### (Example 2-1)

In Example 2-1, a type (for example, a trigger type) of the Trigger frame including the A-PPDU control information may be, for example, the "MU-RTS" (or also referred to as an MU-RTS Trigger frame).

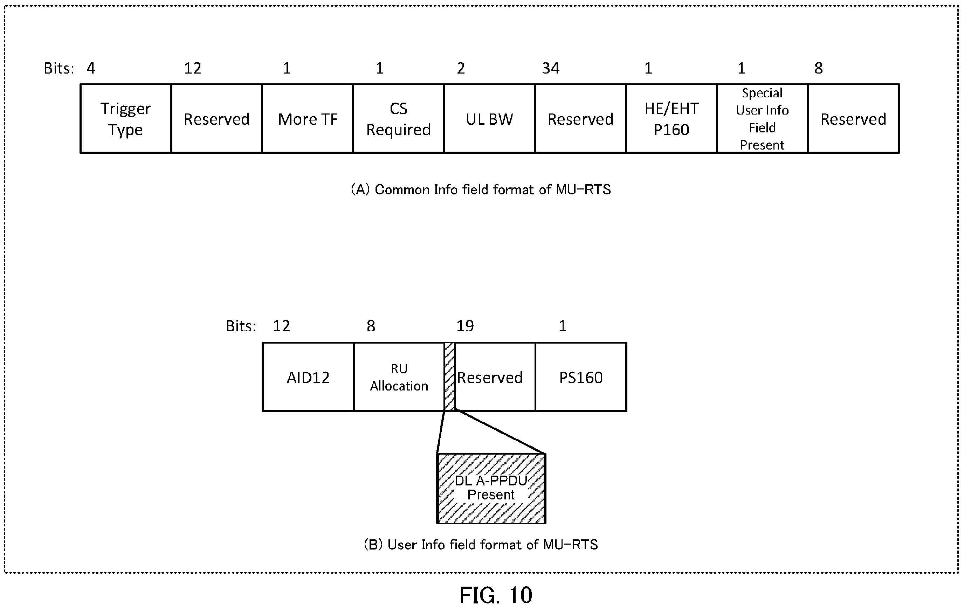

FIGS. 10A and 10B are diagrams illustrating examples of a Common Info field format of the MU-RTS (for example, FIG. 10A)) and a User Info field format of the MU-RTS (for example, FIG. 10B).

For example, in the MU-RTS in 11ax, a UL HE-MCS, a UL FEC Coding Type, a UL DCM, SS Allocation/RA-RU Information, and a UL Target Receive Power are Reserved subfields of a User Info field. As illustrated in FIGS. 10A and 10B, in Example 2-1, in the User Info field format of the MU-RTS, a part of the region, which is a Reserved subfield in the 11ax MU-RTS, may be set to a "DL A-PPDU Present subfield". For example, the DL A-PPDU Present subfield may notify the EHT STA of whether or not the DL A-PPDU is to be transmitted after the MU-RTS.

For example, in a case of DL A-PPDU Present = 0, AP 100 does not necessarily transmit the DL A-PPDU to the HE STA and the EHT STA after the MU RTS. In addition, for example, in a case of DL A-PPDU Present = 1, AP 100 may transmit the DL A-PPDU to the HE STA and the EHT STA after the MU-RTS. Furthermore, in a case of DL A-PPDU Present = 1, AP 100 may notify each STA 200 (for example, the HE STA and the EHT STA) of the frequency resource for the CTS in an RU Allocation subfield in the User Info field, and may concurrently transmit the DL A-PPDU to each STA 200 by the same frequency allocation. For example, the primary channel is included in the frequency resource for the CTS in the 11ax MU-RTS, but in this method, AP 100 indicates the transmission of the CTS in the frequency resource that does not include primary channel to STA 200 that is the transmission destination of the PPDU allocated to the non-primary channel in the DL A-PPDU. For example, since the EHT PPDU om FIG. 1 is transmitted in the frequency resource that does not include the primary channel, its destination EHT STA transmits the CTS that does not include the primary channel in response to the MU-RTS. In addition, STA200 that has received the MU-RTS transmits the CTS, based on the carrier-sensing result in the frequency resource for the CTS notified by the MU-RTS. That is, in a case where the primary channel is not included in the frequency resource for the CTS notified by the MU-RTS, STA 200 may transmit the CTS even when the primary channel is busy.

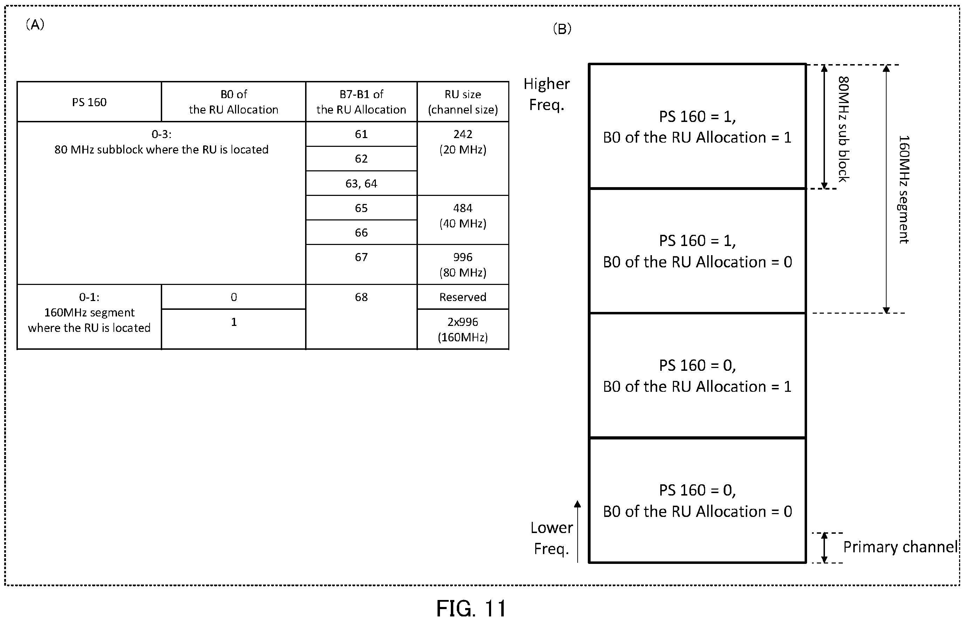

FIGS. 11A and 11B area diagrams illustrating an example of a notification method of the frequency resource by the MU-RTS.

For example, in the MU-RTS, the frequency resource for the CTS may be individually notified to STA 200 by the "RU Allocation subfield" included in the User Info of the MU-RTS. The RU Allocation subfield notifies frequency resources within the range of the bandwidth notified by an "UL BW subfield" included in the Common Info of the MU-RTS. For example, as illustrated in FIG. 11A, the frequency resources may be notified by using the RU allocation subfield. In FIG. 11A, a "PS 160 subfield" notifies which of primary 160 MHz and secondary 160 MHz includes the frequency resource. For example, the PS 160 subfield and a first bit (B0) of the RU Allocation indicate a 80 MHz subblock or a 160 MHz segment including the frequency resource indicated by B7-B 1 the RU Allocation as illustrated in FIG. 11B.

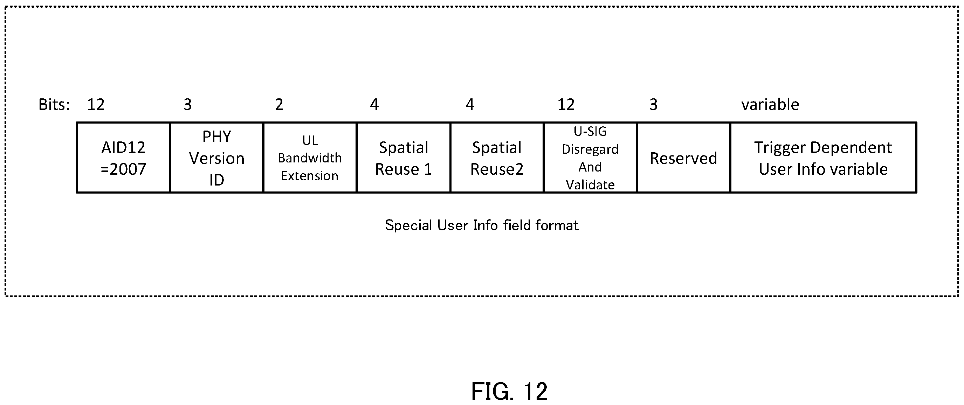

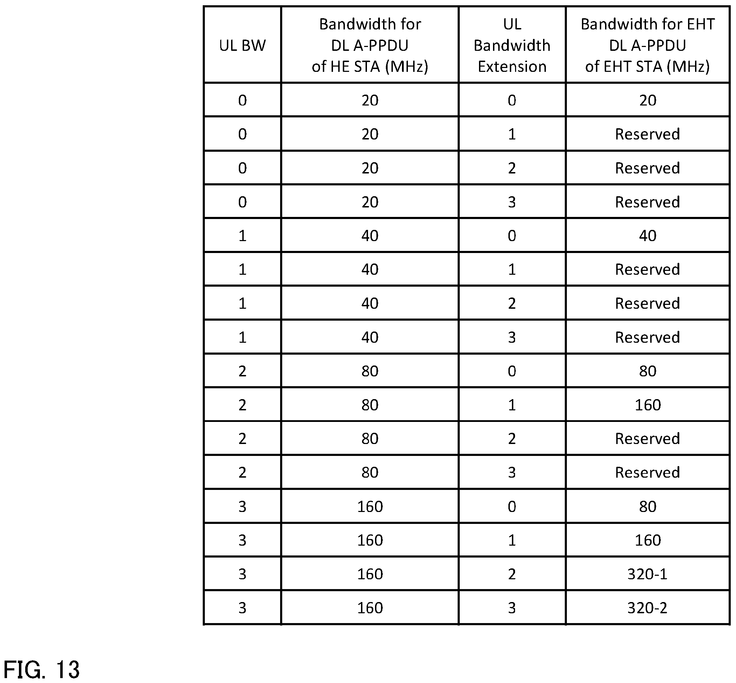

In a case where the transmission of the CTS and the DL A-PPDU using the frequency resource of the uplink bandwidth (UL BW) > 160 MHz is notified, for example, a "UL Bandwidth Extension subfield" included in Special User Info illustrated in FIG. 12 may be used. For example, as illustrated in FIG. 13, the frequency bandwidth may be notified to each of the HE STA and the EHT STA by a combination of the UL BW subfield in the Common Info field and the UL Bandwidth Extension subfield in a Special User Info field.

For example, the combination of the UL BW subfield and the UL Bandwidth Extension subfield is used to indicate the frequency bandwidth (BW) of a UL signal, but in a case of DL A-PPDU present = 1, the combination may also be used (in other words, diverted or reused) to notify the frequency resource of the DL A-PPDU. In addition, since the HE STA supports frequency bandwidth BW ≤ 160 MHz, AP 100 may allocate, for example, the PPDU for the HE STA to a frequency resource in primary 160 MHz. In other words, in a case of BW > 160 MHz, AP 100 does not necessarily allocate the PPDU for the HE STA to secondary 160 MHz.

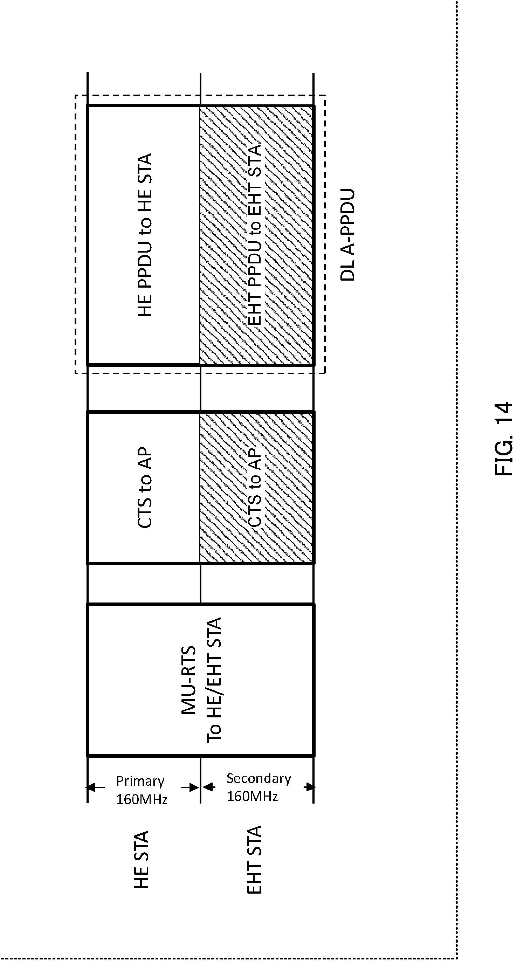

FIG. 14 is a diagram illustrating an operation example in a case where the control information of the DL A-PPDU is transmitted to the HE STA and the EHT STA using the MU-RTS.

AP 100 transmits, for example, the MU-RTS including the A-PPDU control information to the HE STA and the EHT STA. Here, for example, in the RU Allocation subfield, AP 100 may notify the HE STA of the transmission of the CTS and the reception of the DL A-PPDU in the Primary channel (for example, Primary 160 MHz in FIG. 14), and may notify the EHT STA of the transmission of the CTS and the reception of the DL A-PPDU in the non-primary channel (for example, Secondary 160 MHz in FIG. 14).

In FIG. 14, for example, in a case where the HE STA receives the MU-RTS transmitted from AP 100, the HE STA recognizes that the DL A-PPDU Present subfield is a Reserved subfield. Therefore, for example, the HE STA transmits the CTS to AP 100 in the frequency resource (Primary 160 MHz in FIG. 14) notified in the RU Allocation subfield. After the transmission of the CTS, for example, the HE STA may receive the HE PPDU included in the DL A-PPDU in the primary channel (in other words, the frequency resource used for the transmission of the CTS).

In addition, in FIG. 14, for example, in a case where the EHT STA receives the MU-RTS transmitted from AP 100, the EHT STA refers to the DL A-PPDU Present subfield. For example, in a case of DL A-PPDU Present = 1, the EHT STA transmits the CTS to AP 100 in a frequency resource notified in the RU Allocation subfield (for example, the non-primary channel. In FIG. 14, Secondary 160 MHz). For example, in FIG. 14, in order for the EHT STA to transmit the CTS in Secondary 160 MHz, in the User Info addressed to the EHT STA, PS 160 = 1, B0 of the RU Allocation = 1, and B7-B1 of the RU Allocation = 68 in FIGS. 11A and 11B are notified. After the transmission of the CTS, for example, the EHT STA may receive the EHT PPDU included in the DL A-PPDU in the frequency resource notified in the RU Allocation subfield (in other words, the frequency resource used for the transmission of the CTS).

In addition, AP 100 may notify the no response subfield described in Example 1-1 of Method 1 using the Reserved subfield included in the User Info of the MU-RTS. For example, the value of the no response subfield may be decided based on the length of the DL A-PPDU. When the length of the DL A-PPDU is greater than a set threshold value, since a signal error is likely to occur and the overhead due to re-transmission is large, AP 100 notifies the transmission of the CTS as no response = 0. In addition, in a case where the length of the DL A-PPDU is less than or equal to the set threshold value, since a signal error is unlikely to occur and the overhead due to re-transmission is small, AP 100 notifies the transmission stop of the CTS as no response = 1.

In addition, AP 100 may notify the monitoring period subfield described in Example 1-2 of Method 1 using the Reserved subfield included in the User Info of the MU-RTS. For example, in a case of monitoring period subfield = 1, the certain period in which the DL A-PPDU is transmitted may be the value of a Duration field. The value of the Duration field may indicate from the transmission end of the PPDU including the MU-RTS to the end of frame exchange including the DL A-PPDU, and may include the period of Ack/BA for the DL A-PPDU. In addition, the certain period (for example, the value of the Duration field) may include a period of a consecutive plurality of times of exchange of the DL A-PPDU and Ack/BA. Alternatively, since a "UL Length subfield" (corresponding to a 12-bit Reserved subfield located on the right of the Trigger type in FIG. 10A) included in the Common Info field is a Reserved subfield in the 11ax MU-RTS, AP 100 may notify the length of the DL A-PPDU using the UL Length subfield.

Note that an "HE/EHT P160 subfield" described in FIG. 10A may be the Reserved subfield in a case of the MU-RTS.

According to Example 2-1 of Method 2, since the EHT STA can acquire the frequency resource information for receiving the EHT PPDU included in the DL A-PPDU, based on the control information included in the MU-RTS, the EHT STA can appropriately receive the DL A-PPDU in the non-primary channel. Furthermore, since interference prevention, which is an original purpose of frame exchange of the MU-RTS and the CTS, can be performed concurrently with the indication of the control information of the DL A-PPDU, the overhead is reduced, and efficiency is improved.

Note that the allocation resource of the DL A-PPDU is not limited to the same frequency resource as the allocation resource of the CTS, and may be a frequency resource different from the allocation resource of the CTS as long as the frequency resource is decided based on the allocation resource of the CTS.

### (Example 2-2)

In Example 2-2, the type (for example, the Trigger type) of the Trigger frame including the A-PPDU control information may be newly defined.

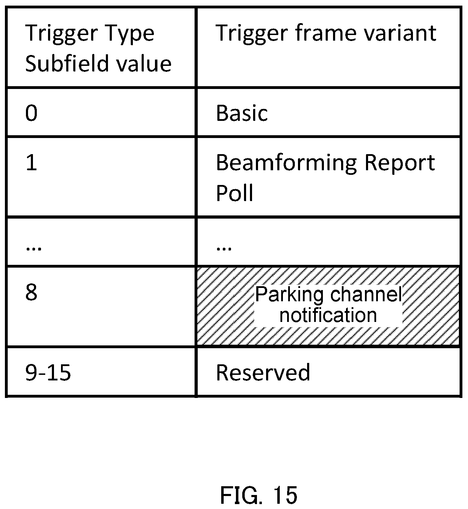

For example, the Trigger frame for AP 100 to notify STA 200 of the A-PPDU control information may be defined as a "Parking channel notification". FIG. 15 is a diagram illustrating an example of a correspondence relationship between the type (variant) of the Trigger frame and the value of the Trigger type subfield in the Trigger frame. As illustrated in FIG. 15, the Parking channel notification may be set (for example, added) as one of the Trigger types.

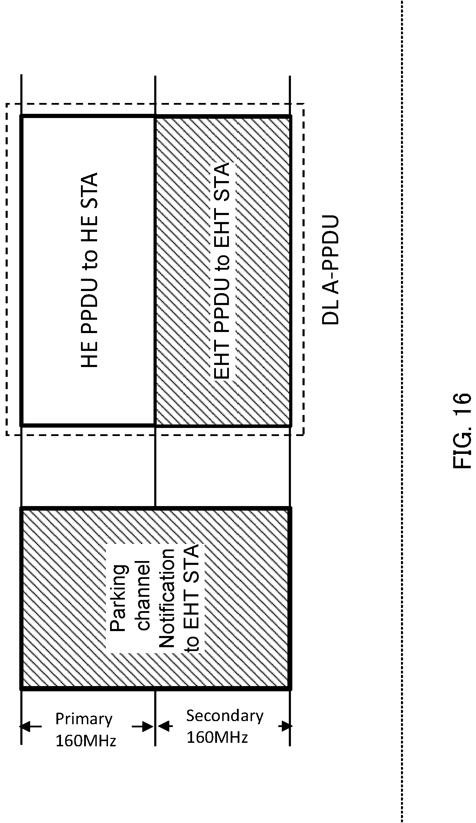

FIG. 16 is a diagram illustrating an operation example of the transmission of the DL A-PPDU using the Trigger frame corresponding to the Parking channel notification.

As illustrated in FIG. 16, for example, the Parking channel notification may be transmitted to the EHT STA before AP 100 transmits the DL A-PPDU. For example, in a case where the EHT STA receives the Parking channel notification, the EHT STA does not necessarily transmit a response signal (for example, the ACK or the BA) with respect to the Parking channel notification. In addition, in a case where the HE STA receives the Parking channel notification, the HE STA may stop the reception process because a Trigger type subfield value (for example, 8 in the example in FIG. 15) corresponds to Reserved in the 11ax prescriptions.

The Parking channel notification may include, for example, a "Parking channel information subfield" for notification of the channel information (for example, the channel number or the frequency resource information) for the EHT STA to receive the DL A-PPDU (for example, the EHT PPDU).

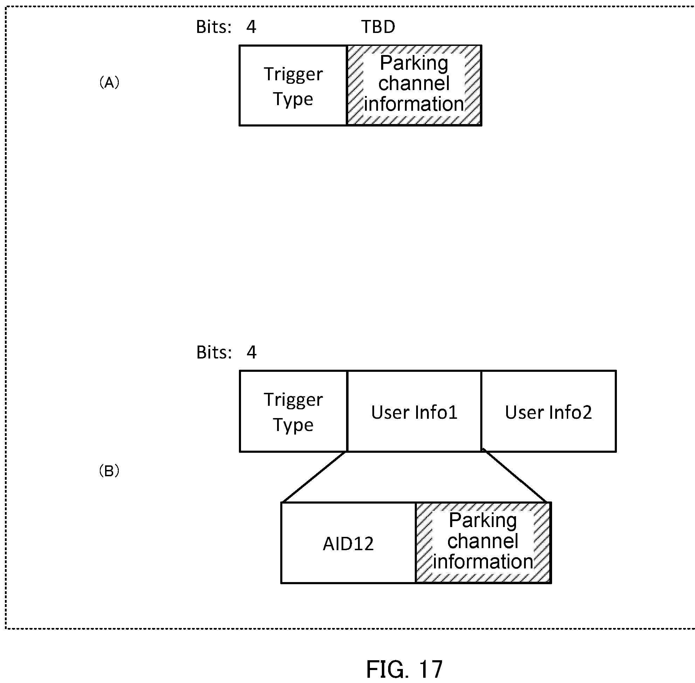

FIGS. 17A and 17B are diagrams illustrating examples of the format of the Parking channel notification.

For example, as illustrated in FIG. 17A, the Parking channel notification may be a Trigger frame that includes information common to plural STAs 200 (for example, common information or the Common Info field) and does not include individual information of STA 200 (for example, the user information or the User Info field). In this case, for example, the Parking channel notification may be transmitted as broadcast information addressed to a plurality of (for example, all of) EHT STAs included in the BSS. Upon receiving the Parking channel notification, each EHT STA may perform the reception process of the DL A-PPDU in the channel notified in the Parking channel information.

Alternatively, for example, as illustrated in FIG. 17B, the Parking channel notification may be a Trigger frame that includes the individual information of plural STAs 200 (for example, the user information or the User Info field) and does not include the information common to plural STAs 200. In this case, for example, the Parking channel notification may be transmitted to the EHT STA, which is the destination of the DL A-PPDU. For example, each User Info included in the Parking channel notification may include the Parking channel information subfield and notify each EHT STA of the channel information for receiving the DL A-PPDU.

In this method, as in Example 2-1 of Method 2, AP 100 may indicate the transmission timing information using the Duration field, the Parking channel information, or the like. In addition, in a case where the Common Info is included, for example, a place corresponding to the UL Length subfield in the Common Info field in a normal Trigger frame may be set as the transmission timing information.

According to Example 2-2, for example, since control information different from the A-PPDU control information is not necessarily included in the Trigger frame corresponding to the Parking channel notification, STA 200 can be notified of the A-PPDU control information by using a smaller number of bits as compared with an existing Trigger frame (for example, a Trigger frame prescribed in 11ax), and thus, the signaling overhead can be reduced.

Note that the name of the Trigger frame for notifying STA 200 of the A-PPDU control information is not limited to the "Parking channel notification" and may be another name.

Example 2-1 and Example 2-2 of Method 2 have been described above.

According to Method 2, STA 200 can receive the A-PPDU control information in the Trigger frame.

### <Method 3>

In Method 3, the A-PPDU control information may be included in a signal different from the Trigger frame.

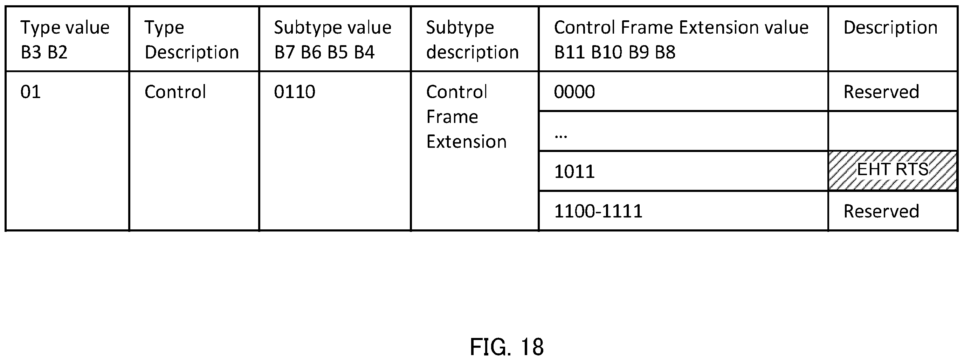

For example, as illustrated in FIG. 18, an EHT RTS including the A-PPDU control information may be set (for example, added) in a Control frame (or the broadcast information). In the example illustrated in FIG. 18, Control Frame Extension value = 1011 is associated with the EHT RTS.

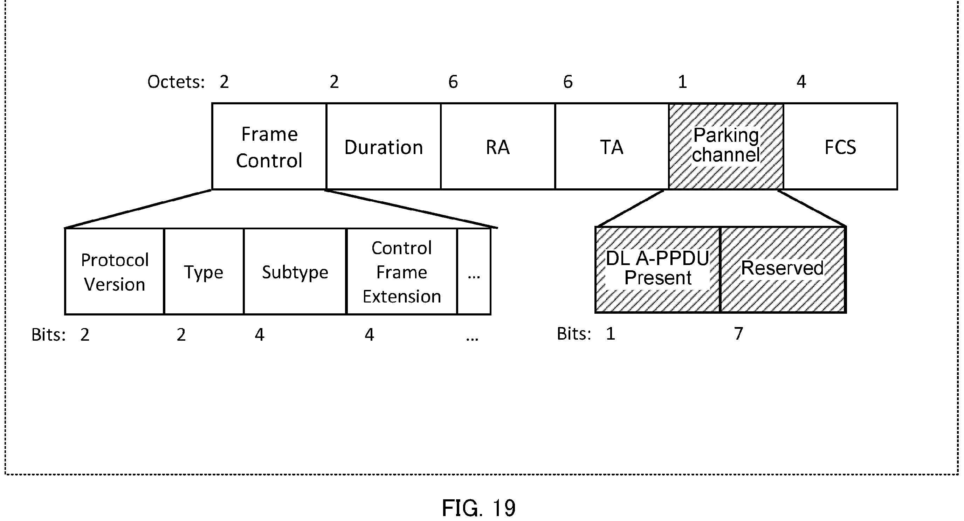

FIG. 19 is a diagram illustrating an example of an EHT RTS frame format. The EHT RTS may include, for example, the "Parking channel field" notifying the A-PPDU control information.

For example, AP 100 may transmit the EHT RTS to the EHT STA in the unit of 20 MHz, similar to the RTS defined in 11ax. The unit of the frequency resource (for example, bandwidth) used for the transmission of the EHT RTS is not limited to 20 MHz.

In addition, as illustrated in FIG. 19, the Parking channel field may include a "DL A-PPDU Present subfield" for notifying STA200 of whether or not the DL A-PPDU is to be transmitted (for example, information regarding the transmission timing of the DL A-PPDU) after the EHT RTS is transmitted. For example, in a case where the DL A-PPDU is to be transmitted after the EHT RTS is transmitted, AP 100 may set DL A-PPDU present = 1 in the Parking channel field in the EHT RTS transmitted in the channel to which the EHT PPDU included in the A-PPDU is allocated. In addition, for example, AP 100 may set DL A-PPDU present = 0 in the Parking channel field in the EHT RTS transmitted in the channel to which the HE PPDU included in the A-PPDU is allocated.

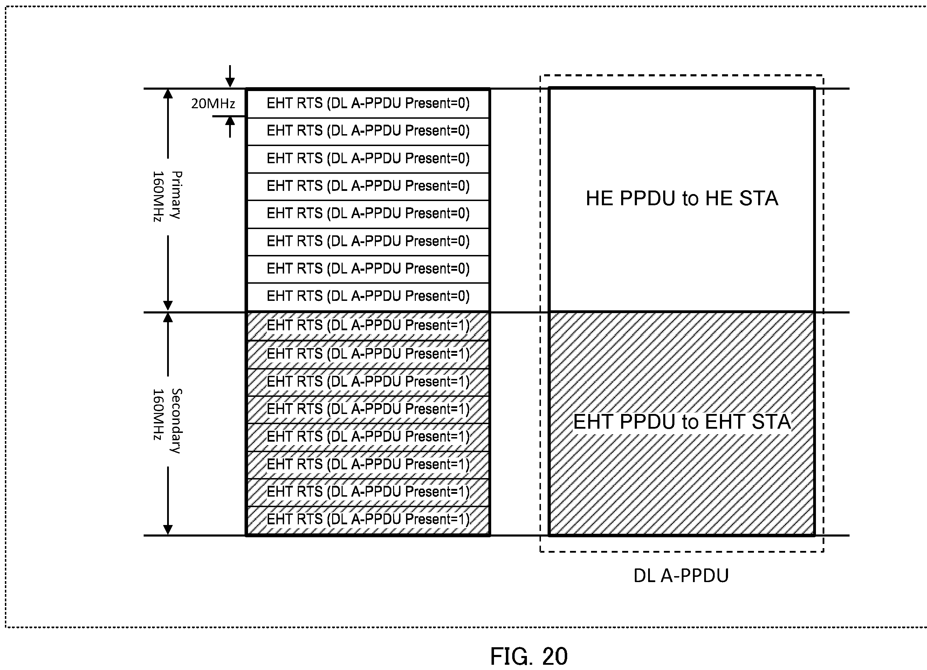

FIG. 20 is a diagram illustrating an operation example of the transmission of the DL A-PPDU in a case where the A-PPDU control information is notified by the EHT RTS.

In FIG. 20, for example, AP 100 transmits the EHT RTS to the EHT STA in the same bandwidth as the bandwidth to which the DL A-PPDU is allocated.

For example, in a case where the EHT STA receives the EHT RTS, the EHT STA may perform the reception process of the EHT PPDU in the channel (Secondary 160 MHz in the example in FIG. 20) corresponding to DL A-PPDU present = 1 included in the EHT RTS. In other words, in a case where the EHT STA receives the EHT RTS, the EHT STA may refrain from performing the reception process of the EHT PPDU in the channel (Primary 160 MHz in the example in FIG. 20) corresponding to DL A-PPDU present = 0 included in the EHT RTS. In addition, for example, the EHT STA does not necessarily transmit a response signal (for example, the CTS) with respect to the EHT RTS. In addition, AP 100 may indicate the transmission timing information by the Duration field or the like as in Example 2-1 of Method 2.

In addition, for example, the HE STA may perform the reception process of the HE PPDU in the Primary channel (for example, Primary 160 MHz).

According to Method 3, the EHT STA can be notifies of the control information regarding the DL A-PPDU through less signaling than in a case of using the Trigger frame as in Method 2.

### <Method4 >

In Method 4, the frequency resource allocation information included in the A-PPDU control information may include information regarding the channel in which the possibility of reception (or the certainty of reception) in STA 200 is higher than that in other channels. A channel having a higher certainty of reception by STA 200 than other channels is, for example, a channel for which reception by STA 200 is guaranteed (or secured).

A channel in which the reception by STA 200 is guaranteed or secured is, for example, a channel that is guaranteed not to be punctured, for example, "guaranteed non-punctured 20 MHz" (also referred to as a "temporary primary channel"). The information regarding such a channel may be included in the frequency resource allocation information in the A-PPDU control information.

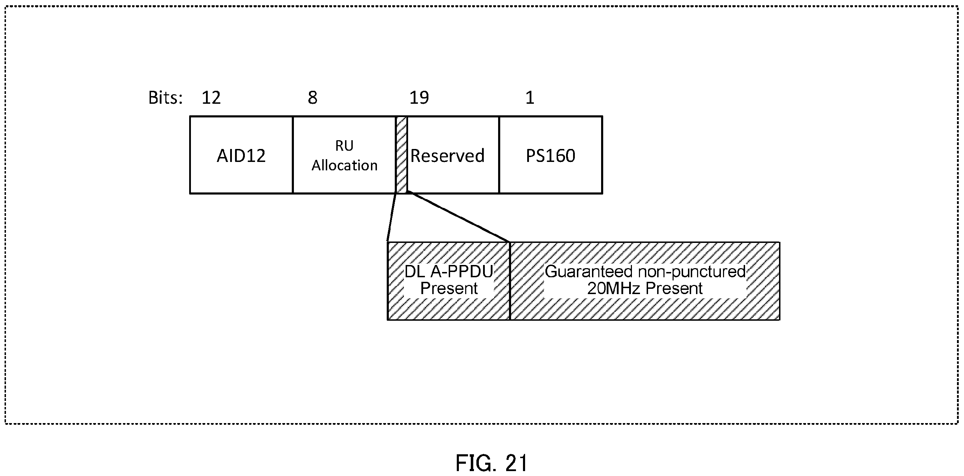

FIG. 21 is a diagram illustrating an example of the User Info field format of the MU-RTS including the control information regarding guaranteed non-punctured 20 MHz.

In FIG. 21, for example, a part of the Reserved subfield of the User Info of the MU-RTS prescribed in 11ax may be set to (for example, read as) a "guaranteed non-punctured 20 MHz present subfield".

For example, in FIG. 21, the DL A-PPDU Present subfield may notify the presence or absence of the DL A-PPDU. As an example, DL A-PPDU Present = 0 may indicate no transmission of the DL A-PPDU and DL A-PPDU Present = 1 may indicate the transmission of the DL A-PPDU.

In addition, in FIG. 21, the guaranteed non-punctured 20 MHz Present subfield may notify whether or not guaranteed non-punctured 20 MHz is set. For example, guaranteed non-punctured 20 MHz Present = 0 may indicate that guaranteed non-punctured 20 MHz is not set, and guaranteed non-punctured 20 MHz Present = 1 may indicate that guaranteed non-punctured 20 MHz is set.

In addition, in FIG. 21, in a case where guaranteed non-punctured 20 MHz is set, the RU Allocation subfield of the MU-RTS may notify the frequency resource corresponding to guaranteed non-punctured 20 MHz.

For example, in a case of DL A-PPDU Present = 1 and guaranteed non-punctured 20 MHz Present = 1, AP 100 may notify STA200 of the frequency resource corresponding to guaranteed non-punctured 20 MHz in the RU Allocation subfield. On the other hand, in a case of DL A-PPDU Present = 0 or guaranteed non-punctured 20 MHz Present = 0, for example, AP 100 may notify the frequency resource for transmitting the CTS in the RU Allocation subfield.

In addition, for example, in a case where the EHT STA receives the MU-RTS of guaranteed non-punctured 20 MHz Present = 1, the EHT STA may receive the DL A-PPDU at 20 MHz notified in the RU Allocation subfield and perform the reception process of the EHT PPDU included in the A-PPDU.

In FIG. 21, as an example, the case where guaranteed non-punctured 20 MHz is notified by the MU-RTS has been described, but the control information notifying guaranteed non-punctured 20 MHz is not limited to the MU-RTS. For example, guaranteed non-punctured 20 MHz may be notified to STA 200 by the Parking channel notification in Method 2 or the EHT RTS in Method 3. Note that Solution Method 4 may be combined with Solution Methods 1 to 3.

According to Method 4, even in a case where the DL A-PPDU is punctured, the EHT STA can receive the EHT PPDU included in the DL A-PPDU in guaranteed non-punctured 20 MHz.

Examples of methods regarding the transmission of the control information regarding the transmission of the DL signal have been described above.

As described above, STA 200 (for example,) controls the reception process of the A-PPDU, based on the A-PPDU control information including the information regarding the timing of the channel (for example, the non-primary channel) for performing the reception process among the plurality of channels used for the transmission of the A-PPDU. Accordingly, STA 200 can perform the reception process of the A-PPDU in an appropriate channel.

The non-limiting embodiments of the present disclosure have been described above.

### (Other Embodiments)

(1) In Methods 1 to 4, the notification of the control information regarding the DL A-PPDU has been described, but the DL signal notified by the control information is not limited to the DL A-PPDU.

Also, the signal notified by the control information is not limited to the downlink signal, and may be an uplink signal (UL signal). For example, at least one of the control information regarding the DL A-PPDU and control information regarding a UL A-PPDU (for example, referred to as UL A-PPDU control information) may be notified to STA200. For example, in a case where both the DL A-PPDU control information and the UL A-PPDU control information are to be notified, AP 100 may transmit a signal including the DL A-PPDU control information and the UL A-PPDU control information to STA 200. Subsequently, for example, AP 100 may concurrently perform the transmission of the DL A-PPDU and the reception of the UL A-PPDU in full-duplex communication (also referred to as Full Duplex). Similarly, STA200 may perform the transmission of the UL A-PPDU and the reception of the DL A-PPDU in full-duplex communication.

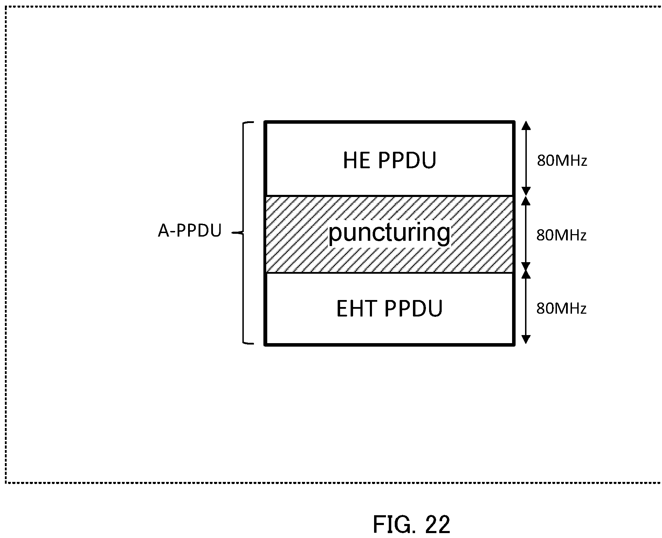

(3) The PPDUs included in the DL A-PPDU are not necessarily allocated to adjacent frequency resources. For example, as illustrated in FIG. 22, a channel between the HE PPDU and the EHT PPDU may be punctured.

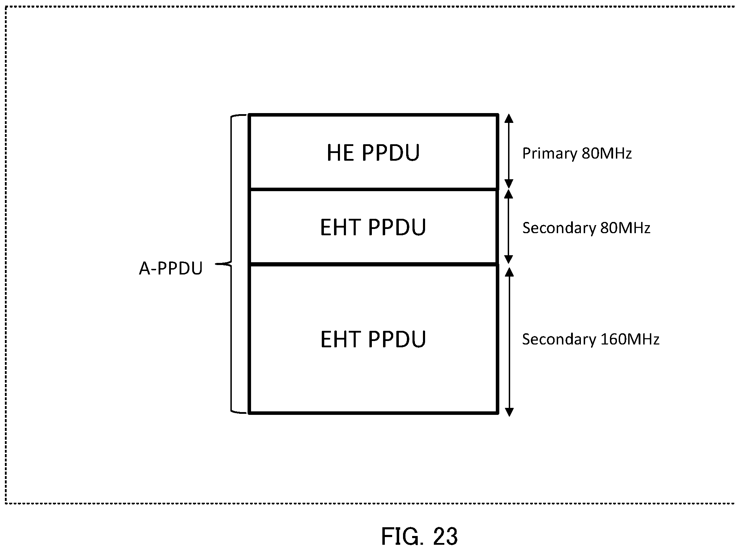

In addition, the PPDUs included in the DL A-PPDU may include PPDUs having different bandwidths (BWs) or three or more PPDUs. For example, as illustrated in FIG. 23, three PPDUs may be included in the A-PPDU. In addition, as illustrated in FIG. 23, bandwidths (BWs) of a plurality of PPDUs included in the A-PPDU may be different from each other.

In addition, types (or wireless standards or versions) of the PPDUs included in the A-PPDU may be different or the same. For example, the A-PPDU may include a plurality of EHT PPDUs and may not include the HE PPDU. Alternatively, the A-PPDU may include a plurality of HE PPDUs and may not include the EHT PPDU.

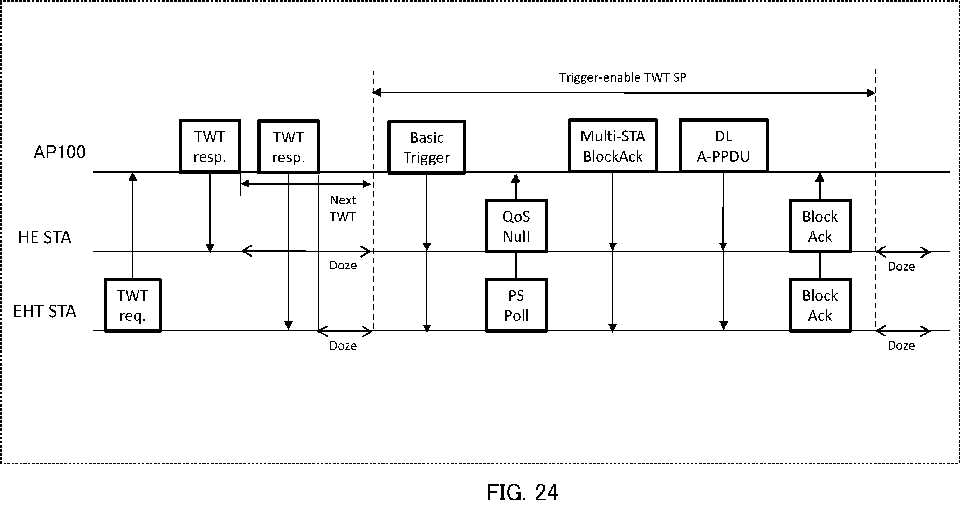

(4) In Example 2 of Method 1, the frame format notifying the certain period in which the DL A-PPDU is transmitted may be, for example, a TWT response. FIG. 24 is a diagram illustrating an operation example in a case where a period in which the DLA-PPDU is transmitted is notified using the TWT response.

In FIG. 24, for example, the EHT STA transmits a TWT request to AP 100 and sets up a Trigger-enabled TWT agreement.

Upon receiving the TWT request, in a case where AP 100 accepts the TWT agreement from the EHT STA, AP 100 transmits the TWT response to the EHT STA. Also, AP 100 transmits the TWT response to the HE STA and sets up the Trigger-enabled TWT agreement. In addition, for example, AP 100 may notify the EHT STA of a period in which the DL A-PPDU can be transmitted using the TWT response.

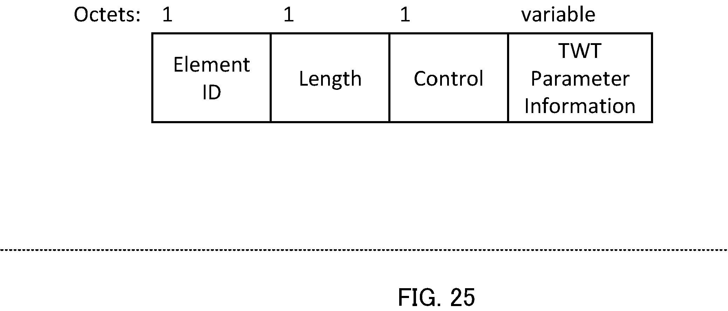

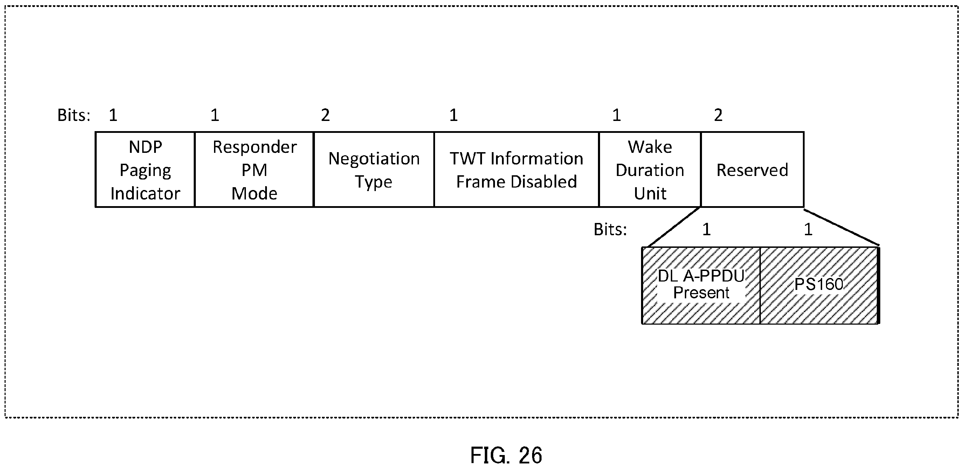

The TWT response may use, for example, a TWT element format illustrated in FIG. 25. FIG. 26 illustrates an example of a Control field format included in the TWT element illustrated in FIG. 25. As illustrated in FIG. 26, the Control field may include, for example, the "DL A-PPDU Present subfield" notifying the presence or absence of the transmission of the DL A-PPDU and the "PS 160 subfield" notifying either one of Primary 160 MHz and Secondary 160 MHz.

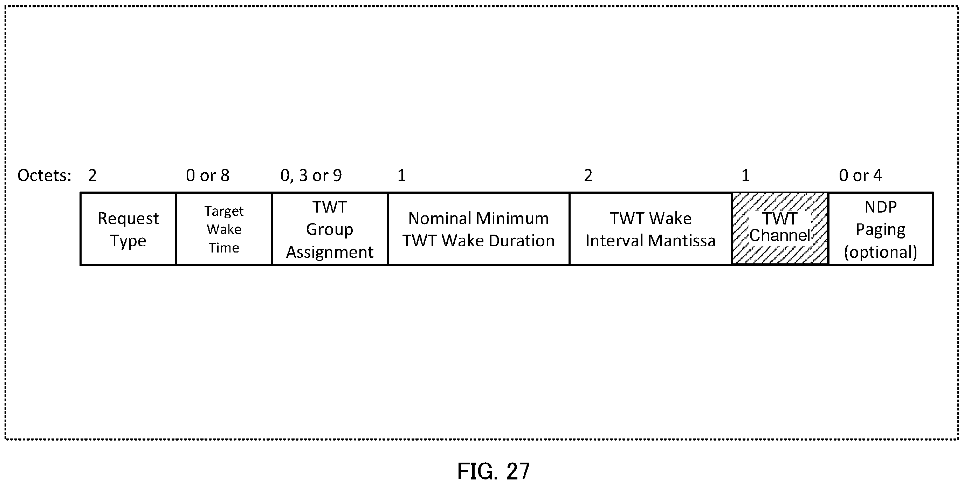

For example, in a case where the DLA-PPDU is to be transmitted during a Trigger-enable TWT Service period (SP), DL A-PPDU Present = 1 may be set. In a case of DL A-PPDU Present = 1, for example, AP 100 may notify the channel information for STA200 to receive the DL A-PPDU in the TWT channel subfield included in an Individual TWT Parameter Set field illustrated in FIG. 27. For example, the TWT channel may notify the channel information of the total 160 MHz in which, as a bitmap (for example, 8 bits), each bit corresponds to the 20 MHz channel. For example, in the PS 160 subfield, AP 100 may notify whether the channel information notified by the TWT channel is included in which of Primary 160 MHz and Secondary 160 MHz, and notify the channel for STA200 to perform the reception process as each bit included in the TWT channel = 1.

In FIG. 24, each STA200 (for example, the HE STA and the EHT STA) transitions from a doze state to an awake state upon receiving the TWT response. In addition, for example, in a case of DL A-PPDU Present = 1 included in the TWT response, each STA 200 performs the reception process of a signal from AP 100 in the channel notified by the TWT channel included in the TWT response during the Trigger-enable TWT SP.

For example, AP 100 may transmit a Basic Trigger frame to each STA 200 after transmitting the TWT response and during the Trigger-enabled TWT SP. The EHT STA may transmit a PS-Poll frame in response to the Basic Trigger frame to notify AP 100 of the awake state. In addition, for example, the HE STA may transmit a QoS Null frame in response to the Basic Trigger frame to notify AP 100 of the awake state.

For example, by receiving the PS-Poll frame and the QoS Null frame from each STA 200, AP 100 confirms the awake state of each STA200. For example, AP 100 may transmit a response signal (Multi-STA Block Ack) to each STA 200.

Also, for example, AP 100 may transmit the DL A-PPDU during the TWT SP in a case where each STA 200 is in the awake state. For example, each STA 200 receives the DL A-PPDU in the channel notified by the TWT response and transmits a response signal (for example, Block Ack) with respect to each PPDU. Also, each STA 200 may return to the doze state in a case where the Trigger-enable TWT SP period ends.

(5) The version of the wireless communication standard is not limited to HE and EHT, and may be another version. For example, an aspect of the present disclosure may be similarly applied to a further future version of EHT (for example, referred to as EHT+). In this case, the operation of the EHT STA in the above-described embodiment may be replaced with the operation of a terminal corresponding to EHT+ (for example, EHT+ STA). Accordingly, the A-PPDU for plural STAs 200 including the EHT+ STA, the EHT STA, and the HE STA has the same effects as those of the above-described embodiment.

Although a new version of EHT has been described using the term "EHT+", the term is not limited thereto, and may be other terms.

In addition, in the above-described embodiment, the description has been given based on the format of 11be as an example, but the format to which an embodiment of the present disclosure is applied is not limited to the format of 11be. An embodiment of the present disclosure may be applied to, for example, IEEE 802.11bd (Next Generation V2X (NGV)), which is a next-generation standard of IEEE 802.11p, which is an in-vehicle standard.

### (Supplements)

Information indicating whether or not STA 200 supports the functions, operations, or processes described in each of the above-described embodiments may be transmitted (or notified) from STA 200 to AP 100 as, for example, capability information or a capability parameter of STA 200.

The capability information may include information elements (IEs) individually indicating whether or not STA 200 supports at least one of the functions, operations, or processes described in each of the above-described embodiments. Alternatively, the capability information may include information elements indicating whether or not STA 200 supports a combination of any two or more of the functions, operations, or processes described in each of the above-described embodiments. The information element may be simply referred to as an element.

For example, based on the capability information received from STA 200, AP 100 may judge (or decide or assume) functions, operations, or processes supported (or not supported) by STA 200 that is the transmission source of the capability information. AP 100 may perform operations, processes, or control according to the judgement result based on the capability information. For example, AP 100 may control the transmission of the A-PPDU, based on the capability information received from STA 200.

Note that some of the functions, operations, or processes described in each of the above-described embodiments not being supported by STA 200 may be read as such some functions, operations, or processes being limited in STA 200. For example, information or a request regarding such limitation may be notified to AP 100.

The information regarding the capability or limitation of STA 200 may be, for example, defined in the standard, or may be implicitly notified to AP 100 in association with known information in AP 100 or information transmitted to AP 100.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a Field Programmable Gate Array (FPGA) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A terminal according to one embodiment of the present disclosure includes: reception circuitry, which, in operation, receives control information including information regarding a timing of a frequency resource for performing a reception process among a plurality of frequency resources used for transmission of a plurality of frequency-multiplexed downlink signals; and control circuitry, which, in operation, controls the reception process, based on the control information.

In one embodiment of the present disclosure, the control information indicates a timing at which a base station transmits the frequency-multiplexed signals after transmission of the control information.

In one embodiment of the present disclosure, the control information indicates a timing at which the base station transmits the frequency-multiplexed signals subsequent to the transmission of the control information.

In one embodiment of the present disclosure, the information regarding the timing indicates transmission stop of a response signal with respect to the control information.

In one embodiment of the present disclosure, the information regarding the timing includes information regarding a period during which a base station is allowed to transmit the downlink signals.

In one embodiment of the present disclosure, the control information includes at least one of information regarding presence or absence of transmission of the downlink signals and information regarding the frequency resource for performing the reception process.

In one embodiment of the present disclosure, the control information is included in a Trigger frame.

In one embodiment of the present disclosure, a type of the Trigger frame is a Multi-User Request-To-Send (MU RTS).

In one embodiment of the present disclosure, a type of the Trigger frame is a type for a base station to notify the terminal of the control information.

In one embodiment of the present disclosure, the control information is included in a signal different from a Trigger frame.

In one embodiment of the present disclosure, the signal different from the Trigger frame is a Request-To-Send (RTS).

In one embodiment of the present disclosure, the frequency resource for performing the reception process is a channel guaranteed to be a channel receivable by the terminal.

A base station according to one embodiment of the present disclosure includes: transmission circuitry, which, in operation, transmits control information including information regarding a timing of a frequency resource for performing a reception process among a plurality of frequency resources used for transmission of a plurality of frequency-multiplexed downlink signals; and control circuitry, which, in operation, controls a transmission process of the plurality of downlink signals, based on the control information.

A communication method according to one embodiment of the present disclosure includes: receiving, by a terminal, control information including information regarding a timing of a frequency resource for performing a reception process among a plurality of frequency resources used for transmission of a plurality of frequency-multiplexed downlink signals; and controlling, by the terminal, the reception process, based on the control information.

A communication method according to one embodiment of the present disclosure includes: transmitting, by a base station, control information including information regarding a timing of a frequency resource for performing a reception process among a plurality of frequency resources used for transmission of a plurality of frequency-multiplexed downlink signals; and controlling, by the base station, a transmission process of the plurality of downlink signals, based on the control information.

The disclosure of the specification, drawings, and abstract contained in the Japanese Patent Application No. 2021-090370 filed on May 28, 2021 is incorporated herein by reference in its entirety.

### Industrial Applicability

An embodiment of the present disclosure is useful for a radio communication system.

### Reference Signs List

100 AP
101, 201 Radio receiver
102 Demodulator/decoder
103 Scheduler
104 Control information generator
105 Data generator
106 Encoder
107 Modulator
108 Preamble generator
109, 207 Radio transmitter
200 STA
202 Preamble demodulator
203 Data demodulator
204 Decoder
205 A-PPDU control information holder
206 Transmission signal generator

## Claims

1. A terminal, comprising:
reception circuitry, which, in operation, receives control information including information regarding a timing of a frequency resource for performing a reception process among a plurality of frequency resources used for transmission of a plurality of frequency-multiplexed downlink signals; and
control circuitry, which, in operation, controls the reception process, based on the control information.

2. The terminal according to claim 1, wherein the control information indicates a timing at which a base station transmits the frequency-multiplexed signals after transmission of the control information.

3. The terminal according to claim 2, wherein the control information indicates a timing at which the base station transmits the frequency-multiplexed signals subsequent to the transmission of the control information.

4. The terminal according to claim 3, wherein the information regarding the timing indicates transmission stop of a response signal with respect to the control information.

5. The terminal according to claim 1, wherein the information regarding the timing includes information regarding a period during which a base station is allowed to transmit the downlink signals.

6. The terminal according to claim 1, wherein the control information includes at least one of information regarding presence or absence of transmission of the downlink signals and information regarding the frequency resource for performing the reception process.

7. The terminal according to claim 1, wherein the control information is included in a Trigger frame.

8. The terminal according to claim 7, wherein a type of the Trigger frame is a Multi-User Request-To-Send (MU RTS).

9. The terminal according to claim 7, wherein a type of the Trigger frame is a type for a base station to notify the terminal of the control information.

10. The terminal according to claim 1, wherein the control information is included in a signal different from a Trigger frame.

11. The terminal according to claim 10, wherein the signal different from the Trigger frame is a Request-To-Send (RTS).

12. The terminal according to claim 1, wherein the frequency resource for performing the reception process is a channel guaranteed to be a channel receivable by the terminal.

13. A base station, comprising:
transmission circuitry, which, in operation, transmits control information including information regarding a timing of a frequency resource for performing a reception process among a plurality of frequency resources used for transmission of a plurality of frequency-multiplexed downlink signals; and
control circuitry, which, in operation, controls a transmission process of the plurality of downlink signals, based on the control information.

14. A communication method, comprising:
receiving, by a terminal, control information including information regarding a timing of a frequency resource for performing a reception process among a plurality of frequency resources used for transmission of a plurality of frequency-multiplexed downlink signals; and
controlling, by the terminal, the reception process, based on the control information.

15. A communication method, comprising:
transmitting, by a base station, control information including information regarding a timing of a frequency resource for performing a reception process among a plurality of frequency resources used for transmission of a plurality of frequency-multiplexed downlink signals; and
controlling, by the base station, a transmission process of the plurality of downlink signals, based on the control information.
